Europäisches Patentamt

(19) European Patent Office

Office européen des brevets

(11) Veröffentlichungsnummer : **0 351 621 B1**

# (12) EUROPÄISCHE PATENTSCHRIFT

(45) Veröffentlichungstag der Patentschrift :
04.12.91 Patentblatt 91/49

(51) Int. Cl.⁵ : **B01J 41/14**

(21) Anmeldenummer : 89112083.4

(22) Anmeldetag : 01.07.89

(54) Verfahren zur Herstellung von bifunktionellen Anionenaustauschharzen, neue bifunktionelle Anionenaustauschharze und ihre Verwendung.

(30) Priorität : 16.07.88 DE 3824266

(43) Veröffentlichungstag der Anmeldung :
24.01.90 Patentblatt 90/04

(45) Bekanntmachung des Hinweises auf die
Patenterteilung :
04.12.91 Patentblatt 91/49

(84) Benannte Vertragsstaaten :
DE ES FR GB IT

(56) Entgegenhaltungen :
EP-A- 0 032 671
FR-A- 2 327 260
US-A- 3 791 866

(72) Erfinder : **Mitschker, Alfred, Dr.**
**Am Gartenfeld 50**
**W-5068 Odenthal-Holz (DE)**
Erfinder : **Lange, Peter Michael, Dr.**
**Walter-Flex-Strasse 9**
**W-5090 Leverkusen 1 (DE)**
Erfinder : **Heller, Harold, Dr.**
**Hufelandtrasse 59**
**W-5000 Köln 80 (DE)**
Erfinder : **Werner, Friedrich, Dr.**
**Auf der Hedwigshöhe 8**
**W-5064 Rösrath-Forsbach (DE)**
Erfinder : **Soest, Hans-Karl**
**Waldstrasse 186a**
**W-5000 Köln 90 (DE)**
Erfinder : **Siegers, Günter**
**Altenberger-Dom-Strasse 194**
**W-5060 Bergisch-Gladbach 2 (DE)**

(73) Patentinhaber : **BAYER AG**
**W-5090 Leverkusen 1 Bayerwerk (DE)**

**Beschreibung**

Die Erfindung betrifft ein neues Verfahren zur Herstellung von bifunktionellen Anionenaustauschern, die nach dem Verfahren erhältlichen neuen bifunktionellen Anionenaustauschharze und deren Verwendung.

Als bifunktionelle Anionenaustauschharze werden im Fachgebrauch und im Rahmen der vorliegenden Erfindung Anionenaustauscher bezeichnet, die sowohl schwachbasische tertiäre Aminogruppen, als nach starkbasische quartäre Ammoniumgruppen, enthalten, Bifunktionelle Anionenaustauschharze sind bekannt. Sie werden bislang nach folgenden Verfahren hergestellt :

a)  Umsetzung von Chlormethylgruppen aufweisenden Harzmatrices (aus vernetztem Polystyrol) mit Amingemischen, die tertiäre und sekundäre Amine in bestimmten Molverhältnissen enthalten (siehe z.B. US-A 4177140) ;

b)  durch partielle Quaternierung von schwachbasischen, tertiäre Aminogruppen aufweisenden Anionenaustauschern (siehe US-A-4177140, US-A-3001868, EP-A 0032671).

Bifunktionelle Anionenaustauscher, und zwar schwachbasische Anionenaustauschharze mit einem geringen Gehalt an starkbasischen Gruppen und starkbasische Anionenaustauschharze mit einem geringen Gehalt an schwachbasischen Gruppen, entstehen ferner infolge von Sekundärreaktionen bei der Herstellung von schwachbasischen Anionenaustauschharzen durch Umsetzung von chlormethylierten Harzmatrices mit sekundären Aminen bzw. infolge unvollständiger Umsetzung bei der Herstellung von starkbasischen Anionenaustauschern durch Quaternierung von tertiäre Aminogruppen aufweisenden schwachbasischen Anionenaustauschern.

Das Verhältnis der starkbasischen Gruppen zu den schwachbasischen Gruppen in den bifunktionellen Anionenaustauschharzen wird meistens dem vorgesehenen Verwendungszweck für die Anionenaustauscher angepaßt und schwankt je nach Verwendungszweck zwischen 3 : 97 und 90 : 10, vorzugsweise 4 : 96 und 80: 20.

Die bifunktionellen Anionenaustauscher zeichnen sich gegenüber den starkbasischen Anionenaustauschern durch eine erhöhte nutzbare Kapazität (NK), eine geringe Neigung zur Verschmutzung durch organische Stoffe, eine geringere Volumenänderung bei der Beladung bzw. Regenerierung und durch einen geringeren Bedarf an Regeneriermittel aus. Von diesen Eigenschaften wird auf den verschiedensten Gebieten, z.B. zur Entsalzung von Wasser, zur Wiedergewinnung von Gold und Silber aus cyanidhaltigen wäßrigen Lösungen und vor allem zur Entsalzung und Entfärbung wäßriger Zuckerlösungen Gebrauch gemacht (siehe z.B. US-A-4177140 ; GB-A-954435 ; US-A-4082701).

Gegenüber den schwachbasischen Anionenaustauschern haben die bifunktionellen Anionenaustauscher den Vorteil, daß sie ihr Volumen beim Beladen und Regenerieren sehr viel weniger ändern und deshalb einen geringeren apparativen Aufwand erfordern und eine höhere Beständigkeit und längere Lebensdauer aufweisen.

Bei der Verwendung zur Entsalzung und Entfärbung von Glucoselösungen befriedigen die bislang bekannten bifunktionellen Anionenaustauschharze jedoch noch nicht, da sie infolge ihres Gehaltes an starkbasischen Gruppen bewirken, daß ein erheblicher Teil der Glucose zu Fructose isomerisiert. Diese Isomerisierung ist unerwünscht, weil für wichtige Einsatzgebiete, z.B. im Pharmabereich, reine, d.h. von jeglichen Fremdstoffen, als auch von Fructose freie Glucoselösungen, verlangt werden. Es bestand daher die Aufgabe, bifunktionelle Anionaustauscher aufzufinden, die zwar die anerkannt guten Eigenschaften der bifunktionellen Anionenaustauschharze, wie hohe nutzbare Kapazität, reversible Bindung organischer Stoffe, geringe Volumenänderung und geringer Regeneriermittelbedarf, nicht aber deren nachteilige Eigenschaft, Glucose zu Fructose zu isomerisieren, aufweisen.

Es wurde gefunden, daß bifunktionelle Anionenaustauscher mit den gewünschten und/oder auch anderen neuen vorteilhaften Eigenschaften erhalten werden, wenn man die bifunktionellen Anionenaustauscher in bestimmter Weise herstellt, nämlich durch partielles Quaternieren schwachbasischer, tertiäre Aminogruppen aufweisender Anionenaustauscher, diese aber vor dem Quaternieren mit starken Säuren partiell belädt, d.h. vor dem Quaternieren einen gewissen Teil der schwachbasischen Aminogruppen im Anionenaustauscher in die Salzform überführt.

Die Erfindung betrifft daher ein Verfahren zur Herstellung von bifunktionellen Anionenaustauschharzen durch partielles Quaternieren von schwachbasischen, tertiäre Aminogruppen aufweisenden Anionenaustauschern mittels üblicher Alkylierungsmittel, das durch gekennzeichnet ist, daß man die schwachbasischen Anionenaustauscher vor dem Quaternieren mit starken Säuren partiell belädt.

Unter "üblichen Alkylierungsmitteln" sind im Rahmen des erfindungsgemäßen Verfahrens die für die Quaternierung von schwachbasischen Anionenaustauschern bekannterweise verwendeten Alkylierungs- und Aralkylierungsmittel zu verstehen (siehe z.B. US-A 3989650 und 4082701).

Die Menge an starken Säuren, die für die erfindungsgemäße partielle Vorbeladung der schwachbasischen Anionenaustauschharze verwendet wird, wird vorzugsweise so bemessen, daß auf 1 Mol Aminogruppen im Anionenaustauscher 0,3 bis 0,85 Val Säure, vorzugsweise 0,35 bis 0,80 Val Säure entfallen, d.h. daß 30 bis 85%, vorzugsweise 35 bis 80%, der Aminogruppen des Anionenaustauschers in der Salzform vorliegen.

Die erfindungsgemäße partielle Beladung der schwachbasischen Anionenaustauscher mit starken Säuren kann in verschiedener Weise vorgenommen werden :

1. indem man den schwachbasischen Anionenaustauscher unmittelbar mit der berechneten Säuremenge partiell belädt ; oder

2. indem man die partielle Beladung zweistufig vornimmt und den schwachbasischen Anionenaustauscher zunächst mit einem Säureüberschuß vollständig belädt und in einer zweiten Stufe den vollständig beladenen schwachbasischen Anionenaustauscher durch Behandeln mit einer berechneten Menge wäßriger Base (0,7 bis 0,15 Val Base je Mol Aminogruppen im schwachbasischen Anionenaustauscher) partiell regeneriert.

Bei der Quaternierung der schwachbasischen Anionenaustauscher, die gemäß Verfahrensweise 1 partiell beladen wurden, werden bifunktionelle Anionenaustauscher erhalten, die — verglichen mit bifunktionellen Anionenaustauschern gleichen Gehaltes an starkbasischen Gruppen, die nach bekannten Verfahren hergestellt wurden, — einen wesentlich geringeren oder keinen Isomerisierungseffekt auf Glucose aufweisen.

Bei der Quaternierung der schwachbasischen Anionenaustauscher, die gemäß Verfahrensweise 2 zweistufig partiell beladen wurden, werden bifunktionelle Anionenaustauscher erhalten, die sich von den nach bekannten Verfahren hergestellten bifunktionellen Anionenaustauschern gleichen Quaternierungsgrades durch höhere Entfärbungsleistung, eine leichtere Regenerierbarkeit und durch eine noch geringere Neigung zur Verschmutzung durch organische Substanzen auszeichnen.

Es wurde gefunden, daß durch partielle Vorbeladung der schwachbasischen Anionenaustauschharze mit starken Säuren eine bestimmte Anordnung der stark- und schwachbasischen Gruppen innerhalb des Harzkornes erhalten wird und daß diese bestimmte Anordnung der starkbasischen Gruppen im Harzkorn die Ursache für die neuen, verbesserten Eigenschaften der erfindungsgemäß erhältlichen bifunktionellen Anionenaustauscher ist.

Bei der Quaternierung der schwachbasischen Anionenaustauscher, die gemäß Verfahrensweise 1 partiell beladen wurden, werden bifunktionelle Anionenaustauscher erhalten, die die starkbasischen Gruppen in der Harzkornmitte enthalten ; bei der Quaternierung der schwachbasischen Anionenaustauscher, die gemäß Verfahrensweise 2 partiell beladen wurden, befinden sich die starkbasischen Gruppen in der Schale des Harzkornes. Bei der Quaternierung der schwachbasischen Anionenaustauscher ohne Säurevorbehandlung werden bifunktionelle Anionenaustauscher erhalten, bei denen die starkbasischen Gruppen statistisch über den gesamten Kornquerschnitt verteilt sind.

Das partielle Beladen der schwachbasischen Anionenaustauscher mit Säuren gemäß Verfahrensweise 1 wird zur Erzielung einer möglichst gleichmäßigen partiellen Beladung der Harzkörner vorzugsweise so vorgenommen, daß man den schwachbasischen Anionenaustauscher in der berechneten Menge wäßriger Säure suspendiert und die Suspension bei Temperaturen von 5 bis 40°C, vorzugsweise bei Raumtemperatur, so lange intensiv rührt, bis sich der pH-Wert der wäßrigen Lösung nicht mehr ändert. Die partielle Beladung des schwachbasischen Anionenaustauschers mit Säure kann aber auch in der Weise vorgenommen werden, daß man den Austauscher in vollentsalztem Wasser suspendiert und die Suspension unter intensivem Rühren bei Temperaturen von 5 bis 40°C mit der berechneten Säuremenge versetzt und anschließend wiederum bis zur pH-Wert-Konstanz rührt. Die partielle Quaternierung zum bifunktionellen Anionenaustauscher kann unmittelbar durch Zugabe des Alkylierungsmittels zur Suspension vorgenommen werden.

Beim partiellen Beladen der schwachbasischen Anionenaustauscher gemäß Verfahrensweise 2 kann der erste Teilschritt, das vollständige Beladen des schwachbasischen Anionenaustauschers mit Säuren, sowohl durch Suspendieren des schwachbasischen Anionenaustauschers in der Säure und Rühren der Suspension bis zur pH-Wert-Konstanz der wäßrigen Lösung (batch-Verfahren) oder durch Überleiten der Säure über den in einer Filtersäule befindlichen Anionenaustauscher (Säulenverfahren) erfolgen. Nach dem vollständigen Beladen wird der Säureüberschuß durch Waschen mit entsalztem Wasser entfernt. Der zweite Teilschritt, die partielle Regeneration, wird zur Erzielung einer möglichst gleichmäßigen partiellen Regeneration aller Harzkörner vorzugsweise nach dem batch-Verfahren vorgenommen, d.h. der in der Salzform befindliche schwachbasische Anionenaustauscher wird in entsalztem Wasser suspendiert und die Suspension unter intensivem Rühren bei Temperatur von 5 bis 40°C, mit der berechneten Menge Base versetzt und anschließend bis zur pH-Wert-Konstanz der wäßrigen Lösung gerührt.

Für das Beladen der schwachbasischen Anionenaustauscher mit Säuren eignen sich starke anorganische Säuren wie Salzsäure, Salpetersäure, Schwefelsäure und Phosphorsäure und starke organische Säuren wie Ameisensäure und p-Toluolsulfonsäure. Aus wirtschaftlichen Gründen sind die anorganischen Säuren bevorzugt.

Die Konzentrationen der Säuren in den zum Beladen verwendeten wäßrigen Lösungen betragen vorzugsweise 0,1 bis 20 Gew.-%, insbesondere 5 bis 10 Gew.-%.

Für das partielle Regenerieren der vollständig beladenen schwachbasischen Anionenaustauscher können als wäßrige Lösungen sowohl anorganische als auch organische Basen verwendet werden ; bevorzugt werden die wäßrigen Lösungen von Natriumhydroxid, Kaliumhydroxid, Soda und Ammoniak eingesetzt. Die Konzentrationen der Basen in den wäßrigen Lösungen betragen vorzugsweise 5-10 Gew.-%.

Die im erfindungsgemäßen Verfahren zur Herstellung der bifunktionellen Anionenaustauscher zu verwendenden schwachbasischen Anionenaustauschharze und ihre Herstellung sind bekannt (siehe z.B. Ullmanns Enzyklopädie der technischen Chemie, 4. Auflage, Band 13, Seiten 301-303). Es können schwachbasische Anionenaustauschharze auf Basis vernetzter Polyacrylate oder vernetzter Polystyrole verwendet werden. Die Anionenaustauscher können gelförmig oder makroporös sein. Bifunktionelle Anionenaustauscher mit besonders vorteilhaften Eigenschaften werden ausgehend von Harzen aus vernetztem Polystyrol erhalten.

Anschließend an die erfindungsgemäße partielle Beladung der schwachbasischen Anionenaustauscher mit starken Säuren, werden die partiell in der Salzform vorliegenden Anionenaustauscher in üblicher Weise (siehe Ullmanns Enzyklopädie loc. cit.) quaterniert. Der Quaternierungsgrad richtet sich nach dem Verwendungszweck, für den der betreffende Anionenaustauscher vorgesehen ist. Für die Entsalzung von Zuckerlösungen werden bevorzugt bifunktionelle Anionenaustauscher auf Basis von vernetztem Polystyrol verwendet, deren Gehalt an starkbasischen Gruppen 5 bis 25% der insgesamt im Anionenaustauscher enthaltenen basischen Gruppen beträgt ; für die Entfärbung von Zuckerlösungen werden bevorzugt bifunktionelle, mit hydrophoben Resten, z.B. Benzylresten, quarternierte Anionenaustauscher auf Basis von vernetztem Polyacrylat verwendet, deren Gehalt an starkbasischen Gruppen 20 bis 75, bevorzugt 40 bis 60% der insgesamt im Anionenaustauscher enthaltenen Gruppen beträgt.

Beispiel 1

280 ml (0,515 mol) eines makroporösen schwachbasischen Anionenaustauschers auf Basis von mit 8 Gew.-% Divinylbenzol vernetztem Polystyrol (Totalkapazität = Gehalt an Dimethylaminomethylgruppen : 1,842 mol/l) werden in einem mit Druckhalteventil, Gaseinleitungsrohr, Rührer und Thermometer ausgerüsteten Vierhalskolben mit 361 ml 1 N HCl (0,361 Val) so lange verrührt, bis der pH-Wert der wäßrigen Lösung sich nicht mehr ändert (etwa 30 Min.). Anschließend werden innerhalb von 30 Min. 4,1 g (0,081 mol) Methylchlorid bei 40°C unter Druck und unter Rühren eingeleitet. Das Reaktionsgemisch wird zur Vervollständigung der Umsetzung 7 Stunden bei dieser Temperatur gerührt.

Nach dem Abkühlen wird die flüssige Phase abgetrennt und das Perlpolymerisat in einer Filtersäule zunächst mit 4%iger Natronlauge regeneriert und die im Harz enthaltenen quartären Ammoniumgruppen durch Überleiten von Natriumchloridlösung in die Chloridform überführt.

Es werden 297 ml bikunktioneller Anionenaustauscher erhalten.

Gehalt an starkbasischen Gruppen:   0,08 mol

(= 0,27 mol/l);

Gehalt an schwachbasischen Gruppen:   0,448 mol

(= 1,51 mol/l).

Beispiel 2

270 ml des im Beispiel 1 beschriebenen schwachbasischen Anionenaustauschers (entsprechend 0,497 mol Aminogruppen) werden in einer Filtersäule durch Überleiten von 4 N Salzsäure in die Chloridform überführt. Der Säureüberschuß wird durch Waschen des Anionenaustauschers mit entsalztem Wasser entfernt (pH-Wert des ablaufenden Waschwassers : 4-5). Die auf diese Weise erhaltenen 385 ml Anionenaustauscher in der Salzform werden in der in Beispiel 1 beschriebenen Apparatur in 300 ml entsalztem Wasser suspendiert. Dann wird unter Rühren mit 199 ml 1 N Natronlauge (0,199 mol) versetzt und bis pH-Wert-Konstanz der wäßrigen Lösung gerührt (etwa 30 Min.). Anschließend wird das Harz nach der in Beispiel 1 beschriebenen Arbeitsweise mit 4,1 g (0,081 mol) Methylchlorid partiell quaterniert. Nach der ebenfalls in Beispiel 1 beschriebenen Konfektionierung (Regeneration mit 4%iger Natronlauge und Überführen der quartären Ammoniumgruppe in die Chloridform) werden 315 ml bifunktioneller Anionenaustauscher erhalten.

```
Gehalt an starkbasischen Gruppen:   0,082 mol

                                    (= 0,26 mol/l)

Gehalt an schwachbasischen Gruppen:  0,425 mol

                                    (= 1,35 mol/l).
```

## Beispiel 3

Nach der in Beispiel 1 beschriebenen Arbeitsweise werden 1000 ml des im Beispiel 1 beschriebenen schwachbasischen Anionenaustauschers (entsprechend 1,824 mol Aminogruppen) zunächst durch Verrühren mit 912 ml 1 N HCl (0,912 Val) partiell beladen und anschließend mit 0,25 mol Methylchlorid partiell quaterniert. Nach der Konfektionierung werden 1140 ml bikfunktioneller Anionenaustauscher erhalten.

```
Gehalt an starkbasischen Gruppen:   0,24 mol

                                    (= 0,21 mol/l)

Gehalt an schwachbasischen Gruppen:  1,58 mol

                                    (= 1,39 mol/l).
```

## Beispiel 4

Nach der in Beispiel 1 beschriebenen Arbeitsweise werden 1190 ml eines makroporösen schwachbasischen Anionenaustauschers auf Basis von mit 8 Gew.-% Divinylbenzol vernetztem Polystyrol (Gehalt an Dimethylaminomethylgruppen : 1,802 mol/l) zunächst durch Verrühren mit 1500 ml 1 N Salzsäure partiell beladen und anschließend durch Umsetzung mit 6,55 g (0,13 mol) Methylchlorid partiell quaterniert.
Nach der ebenfalls in Beispiel 1 beschriebenen Konfektionierung werden 1240 ml bifunktioneller Anionenaustauscher erhalten.

```
Gehalt an starkbasischen Gruppen:   0,124 mol

                                    (= 0,1 mol/l)

Gehalt an schwachbasischen Gruppen:  1,674 mol

                                    (= 1,35 mol/l).
```

Bei Verwendung dieses bifunktionellen Anionenaustauschers zur Reinigung von Glucoselösungen liegt der Abfall des Drehwertes der Glucoselösung nach der Behandlung mit diesem Anionenaustauscher innerhalb der Meßgenauigkeit, d.h. bei der Behandlung der Glucoselösung mit diesem Anionenaustauscher tritt praktisch keine Isomerisierung von Glucose zu Fructose ein.

## Beispiel 5

1000 ml eines makroporösen schwachbasischen Anionenaustauschers auf Basis von mit 5 Gew.-% Divinylbenzol und 2 Gew.-% Octadien-1,7 vernetztem Poly-[N-(3-Dimethylamino-propyl)-acrylsäureamid] (Gehalt an basischen Gruppen : 1,8 mol) werden in der in Beispiel 1 beschriebenen Apparatur in 1000 ml entsalztem Wasser suspendiert. Die Suspension wird unter Rühren auf 5°C abgekühlt und anschließend unter Rühren bei 5 bis 10°C innerhalb von 40 Min. mit 69 g 96%iger Schwefelsäure (1,36 Val) versetzt. Die Suspension wird bis zur pH-Wert-Konstanz bei 10°C gerührt (etwa 30 Min.). Der Beladungsgrad des so vorbehandelten Anionenaustauschers beträgt etwa 75 Mol-%.

Anschließend werden innerhalb von 2 Stunden unter Rühren bei 10 bis 15°C 11,9 g (0,235 mol) Methylchlorid in die Suspension eingeleitet. Das Reaktionsgemisch wird weitere 2 Stunden gerührt.

Konfektioniert wird der partiell methylierte Anionenaustauscher im Filterrohr durch Überleiten von 4%iger Natronlauge und Natriumchloridlösung, wie in Beispiel 1 angegeben.

Es werden 1050 ml bifunktioneller Anionenaustauscher erhalten.

```
Gehalt an starkbasischen Gruppen:   0,10 mol/l
Gehalt an schwachbasischen Gruppen: 1,56 mol/l.
```

## Beispiel 6

1000 ml des im Beispiel 5 beschriebenen schwachbasischen Anionenaustauschers auf Polyacrylamidbasis werden im Filterrohr durch Überleiten von 2,5 l 10%iger Schwefelsäure vollständig beladen. Der Säureüberschuß wird durch Auswaschen mit entsalztem Wasser entfernt, bis der pH-Wert im Ablauf auf über 3 angestiegen ist.

Das so vollständig in die Salzform überführte Anionenaustauschharz wird in der im Beispiel 1 beschriebenen Apparatur in 1000 ml entsalztem Wasser suspendiert. Die Suspension wird auf 5°C abgekühlt und anschließend bei 3 bis 5°C innerhalb von 10 Min. mit 40 g 45%iger Natronlauge (0,45 Val) unter Rühren versetzt. Zur Vervollständigung der Neutralisation wird die Suspension noch 30 Min. bei konstantem pH-Wert von 9,3 gerührt. Der Beladungsgrad des Anionenaustauschers beträgt nach dieser partiellen Regeneration etwa 75 Mol-%.

Die partielle Methylierung des Anionenaustauschers mit 11,9 g Methylchlorid und die Konfektionierung des bifunktionellen Anionenaustauschers erfolgen wie in Beispiel 5 beschrieben.

Es werden 1060 ml bifunktioneller Anionenaustauscher erhalten.

```
Gehalt an starkbasischen Gruppen:   0,095 mol/l
Gehalt an schwachbasischen Gruppen: 1,56 mol/l.
```

## Beispiel 7

1000 ml des im Beispiel 5 beschriebenen schwachbasischen Anionenaustauschers auf Polyacrylamidbasis werden, wie in Beispiel 6 angegeben, zunächst unter Verwendung von 2,5 l 10%iger Schwefelsäure vollständig in die Salzform übergeführt.

Das so vorbehandelte Anionenaustauschharz wird dann in einen Rührkolben, ausgestattet mit Rührer, Thermometer, Tropftrichter, Rückflußkühler und pH-Meßvorrichtung, überführt und nach Zugabe von 800 ml entsalztem Wasser unter Rühren bei 5-10°C innerhalb von 10 Minuten mit 80 g (0,9 Mol) 45%iger Natronlauge versetzt. Man rührt noch 30 Minuten bei konstantem pH-Wert (9,5) nach, gibt dann 114 g Benzylchlorid (0,9 mol) hinzu und rührt weitere 8 Stunden bei 50°C. Während dieser Zeit wird in der Suspension durch Zutropfen von insgesamt 180 ml 5 M NaOH der pH-Wert bei 9,5 konstant gehalten.

Nach dem Abkühlen wird der partiell benzylierte Anionenaustauscher im Filterrohr zunächst mit Methanol ausgewaschen, um restliches Benzylchlorid zu entfernen, und anschließend mit entsalztem Wasser bis zur Verdrängung des Methanols.

Es werden 1,150 ml bifunktionaler Anionenaustauscher erhalten.

```
Gehalt an starkbasischen Gruppen : 0,53 mol/l
Gehalt an schwachbasischen Gruppen: 0,75 mol/l.
```

Werden statt 114 g Benzylchlorid 145 g p-Chlor-benzylchlorid eingesetzt, so erhält man 1.130 ml bifunktionelles Anionenaustauschharz mit einem Gehalt von 0,45 mol/l an starkbasischen Gruppen und 0,85 mol/l an schwachbasischen Gruppen.

**Patentansprüche**

1. Verfahren zur Herstellung von bifunktionellen Anionenaustauschharzen durch partielles Quaternieren von schwachbasischen tertiäre Aminogruppen enthaltenden Anionenaustauschern mittels üblicher Alkylierungsmittel, dadurch gekennzeichnet, daß man die schwachbasischen Anionenaustauscher vor dem Quaternieren mit starken Säuren partiell belädt.

2. Verfahren nach Anspruch 1, dadurch gekennzeichnet, daß 30 bis 85% der Aminogruppen im Anionenaustauscher mit starken Säuren beladen sind.

3. Verfahren nach Anspruch 1 oder 2, dadurch gekennzeichnet, daß man für die partielle Beladung Mineralsäuren verwendet.

4. Verfahren nach einem der Ansprüche 1, 2 und/oder 3, dadurch gekennzeichnet, daß man die partielle Beladung mit der berechneten Säuremenge vornimmt.

5. Verfahren nach einem der Ansprüche 1, 2 und/oder 3, dadurch gekennzeichnet, daß man die partielle Beladung zweistufig vornimmt, indem man den schwachbasischen Anionenaustauscher zunächst mit überschüssiger Säure vollständig belädt und in einer zweiten Stufe den vollständig beladenen schwachbasischen Anionenaustauscher durch Behandeln mit einer berechneten Menge wäßriger Base partiell regeneriert.

6. Verfahren nach einem der Ansprüche 1 bis 5, dadurch gekennzeichnet, daß das schwachbasische tertiäre Aminogruppen aufweisende Anionenaustauschharz ein Harz auf Basis von vernetztem Polystyrol ist.

7. Bifunktionelle Anionenaustauscher, erhalten durch partielles Beladen der tertiären Aminogruppen eines schwachbasischen Anionenaustauschers mit starken Säuren und nachfolgendes partielles Quaternieren der partiell in der Salzform vorliegenden schwachbasischen Anionenaustauscher mit üblichen Alkylierungsmitteln.

8. Bifunktionelle Anionenaustauscher, erhalten durch partielles Beladen der tertiären Aminogruppen eines schwachbasischen Anionenaustauschers auf Basis von vernetztem Polystyrol mit einer solchen Säuremenge, daß 30 bis 85% der Aminogruppen in der Salzform vorliegen und nachfolgendes Quaternieren mit einer solchen Menge Alkylierungsmittel, daß der Gehalt des bifunktionellen Anionenaustauschers an starkbasischen Gruppen 5 bis 25% der insgesamt im Harz enthaltenen basischen Gruppen beträgt.

9. Verwendung des bifunktionellen Anionenaustauschers gemäß Anspruch 8 zur Entsalzung und Entfärbung von wäßrigen Zuckerlösungen.

**Claims**

1. Process for the preparation of bifunctional anion exchange resins by partial quaternization of weakly basic anion exchangers containing tertiary amino groups by means of customary alkylating agents, characterized in that the weakly basic anion exchangers are partially loaded with strong acids before quaternization.

2. Process according to Claim 1, characterized in that 30 to 85% of the amino groups in the anion exchanger are loaded with strong acids.

3. Process according to Claim 1 or 2, characterized in that mineral acids are used for the partial loading.

4. Process according to one of Claims 1, 2 and/or 3, characterized in that the partial loading is carried out using the calculated amount of acid.

5. Process according to one of Claims 1, 2 and/or 3, characterized in that the partial loading is carried out in two stages, by first completely loading the weakly basic anion exchanger with excess acid and in a second stage partially regenerating the completely loaded weakly basic anion exchanger by treating with a calculated amount of aqueous base.

6. Process according to one of Claims 1 to 5, characterized in that the weakly basic anion exchange resin containing tertiary amino groups is a resin based on crosslinked polystyrene.

7. Bifunctional anion exchangers, obtained by partial loading of the tertiary amino groups of a weakly basic anion exchanger with strong acids and subsequent partial quaternization of the weakly basic anion exchanger partially present in the salt form using customary alkylating agents.

8. Bifunctional anion exchangers, obtained by partial loading of the tertiary amino groups of a weakly basic anion exchanger based on crosslinked polystyrene with such an amount of acid that 30 to 85% of the amino groups are present in the salt form and subsequent quaternization with such an amount of alkylating agent that the content of strongly basic groups in the bifunctional anion exchanger is 5 to 25% of the total basic groups contained in the resin.

9. Use of the bifunctional anion exchanger according to Claim 8 for desalting and decolorizing aqueous sugar solutions.

## Revendications

1. Procédé de production de résines échangeuses d'anions bifonctionnelles par quaternisation partielle d'échangeurs anioniques contenant des groupes amino tertiaires faiblement basiques au moyen d'agents classiques d'alkylation, caractérisé en ce qu'on charge partiellement avec des acides forts les échangeurs anioniques faiblement basiques avant la quaternisation.

2. Procédé suivant la revendication 1, caractérisé en ce que 30 à 85% des groupes amino de l'échangeur anionique sont chargés avec des acides forts.

3. Procédé suivant la revendication 1 ou 2, caractérisé en ce qu'on utilise pour le chargement partiel des acides minéraux.

4. Procédé suivant l'une des revendications 1, 2 et/ou 3, caractérisé en ce qu'on effectue le chargement partiel avec la quantité calculée d'acide.

5. Procédé suivant l'une des revendications 1, 2 et/ou 3, caractérisé en ce qu'on effectue le chargement partiel en deux étapes, en chargeant tout d'abord complètement avec de l'acide en excès l'échangeur anionique faiblement basique et en régénérant partiellement avec une quantité calculée de base aqueuse, dans une seconde étape, l'échangeur anionique faiblement basique totalement chargé.

6. Procédé suivant l'une des revendications 1 à 5, caractérisé en ce que la résine d'échange anionique faiblement basique portant des groupes amino tertiaires est une résine à base de polystyrène réticulé.

7. Echangeurs anioniques bifonctionnels, obtenus en chargeant partiellement les groupes amino tertiaires d'un échangeur anionique faiblement basique avec des acides forts, puis en quaternisant partiellement les échangeurs anioniques faiblement basiques présents en partie sous forme de sel avec des agents alkylants classiques.

8. Echangeurs anioniques bifonctionnels, obtenus en chargeant partiellement les groupes amino tertiaires d'un échangeur anionique faiblement basique à base de polystyrène réticulé avec une quantité d'acide choisie de manière que 30 à 85% des groupes amino se présentent sous la forme de sel et en effectuant ensuite une quaternisation avec une quantité d'agents alkylants choisie de manière que la teneur en groupes fortement basiques de l'échangeur anionique bifonctionnel s'élève à 5-25% du total des groupes basiques contenus dans la résine.

9. Utilisation de l'échangeur anionique bifonctionnel suivant la revendication 8 pour l'élimination des sels et la décoloration de solutions aqueuses de sucres.